Europäisches Patentamt

European Patent Office

Office européen des brevets

(11) Veröffentlichungsnummer: **0 275 377**
A1

## (12) EUROPÄISCHE PATENTANMELDUNG

(21) Anmeldenummer: 87115732.7

(22) Anmeldetag: 27.10.87

(51) Int. Cl.4 **F16B 13/14**

(30) Priorität: 23.01.87 DE 3701959

(43) Veröffentlichungstag der Anmeldung:
27.07.88 Patentblatt 88/30

(84) Benannte Vertragsstaaten:
AT BE CH ES FR GB IT LI NL SE

(71) Anmelder: **fischerwerke Artur Fischer GmbH & Co. KG**
**Weinhalde 14 - 18**
**D-7244 Waldachtal 3/Tumlingen(DE)**

(72) Erfinder: **Fischer, Artur, Prof.Dr.h.c.**
**Weinhalde 34**
**D-7244 Waldachtal 3/Tumlingen(DE)**

(54) **Verankerung eines Befestigungselementes.**

(57) Die Erfindung betrifft die Verankerung eines Befestigungselementes ((12) in einen Hohlraum führenden Bohrloch eines Bauteiles, insbesondere Hohlkammerbausteines (2), Sandwichplatten oder dgl., durch Einspritzen einer aushärtbaren Masse in eine im Bohrloch befindliche und durch ein in die Bohrlochmündung passendes Ringteil gehaltene Hülle, sowie durch Einschieben des Befestigungselementes (12) in die mit Bindemittel (13) ausgefüllte Hülle. Um eine gleichmäßige wulstbildende Umhüllung des Befestigungselementes zu erreichen, besteht die Hülle aus einem dehnfähigem und über einen Käfig gestülpten engmaschigem Kunststoffgewebe. Ferner ist der Käfig durch vom Ringteil ausgehenden und über ein Stirnteil am vorderen Ende zusammengehaltenen achsparallel verlaufenden Stegen gebildet.

Fig. 2

## Verankerung eines Befestigungselementes

Die Erfindung betrifft die Verankerung eines Befestigungselementes in einem in einen Hohlraum führenden Bohrloch eines Bauteiles, insbesondere Hohlkammerbausteines, Sandwichplatten oder dgl. durch Einspritzen einer aushärtbaren Masse in eine im Bohrloch befindliche, radiale Öffnungen aufweisende und durch ein in die Bohrlochmündung passendes Ringteil gehaltene Hülle, sowie durch Einschieben des Befestigungselementes in die mit Bindemittel ausgefüllte Hülle.

Üblicherweise wird als Hülle für diese Art der Verankerung eine aus einem groben Drahtgewebe bestehende Hülse verwendet. Nach dem Einsetzen der Hülse in das Bohrloch eines beispielsweise aus Hohlkammerbausteinen bestehenden Mauerwerkes wird in die Hülse das zuvor in einer Spritzvorrichtung bereits vermengte, in der Regel auf einem Zweikomponentensystem basierende Bindemittel - beispielsweise Polyesterharz oder Epoxydharz - eingespritzt. Um einen möglichst hohen Haltewert zu erzielen, ist es notwendig, daß das Bindemittel möglichst gleichmäßig auf der gesamten Länge durch die radialen Öffnungen der Hülse austritt. Wird die Düse der Spritzvorrichtung nur am Ringteil angesetzt, ist ein gleichmäßiger Austritt auf der gesamten Länge der Hülse nicht erreichbar, da wegen des grobmaschigen Geflechts der Drahthülse das eingespritzte Bindemittel bereits im vorderen Bereich der Hülse radial nach außen tritt und in den Hohlraum abtropft. Bei Verwendung der bekannten Hülse ist es daher erforderlich, die Düsenspitze bis zum Grund der Hülse einzuschieben und bei gleichmäßigem, geringem Spritzdruck die Düse langsam wieder aus der Hülse herauszuziehen. Selbst bei Anwendung größter Sorgfalt ist es schwierig, einen radial und auf der gesamten Länge gleichmäßigen Austritt des Bindemittels zu erreichen. Durch den nahezu ungebremsten Austritt des Bindemittels durch das grobmaschige Drahtgeflecht ergibt sich ferner ein hoher, nicht für eine Erhöhung des Haltewertes verwertbarer Bindemittelverbrauch.

Der Erfindung liegt daher die Aufgabe zugrunde, für die eingangs genannte Art der Verankerung eine Hülle zu schaffen, mit der eine gleichmäßige wulstbildende Umhüllung des in Hohlräume aufweisendem Mauerwerk zu verankernden Befestigungselementes zu schaffen.

Erfindungsgemäß wird dies dadurch erreicht, daß die Hülle aus einem dehnfähigem und über einen Käfig gestülpten engmaschingem Kunststoffgewebe besteht, wobei der Käfig durch vom Ringteil ausgehenden und über ein Stirnteil am vorderen Ende zusammengehaltenen achsparallel verlaufenden Stegen gebildet ist.

Beim Einspritzen des Bindemittels in die aus dehnfähigem, engmaschigem Kunststoffgewebe bestehende Hülle ist ein Austritt des Bindemittels durch die Hülle erst dann möglich, wenn die Hülle gedehnt ist, und die Maschen des Gewebes damit größer werden. Zur Dehnung der Hülle ist der Aufbau eines Spritzdruckes erforderlich, der allerdings erst auftreten kann, wenn die Hülle vollständig mit Bindemittel ausgefüllt ist. Damit kann die Hülle durch Anlegen der Düse der Spritzvorrichtung am Ringteil vollständig und die Hülle in den Hohlräumen eines Hohlkammerbausteines gleichmäßig dehnend ausgefüllt werden. Es bilden sich somit ringförmige Wülste, die sich an der Rückseite der Stege der Hohlkammerbausteine abstützen. Durch das in der Bohrlochmündung festsitzende Ringteil des Käfigs wird die am Ringteil und Stirnteil befestigte Hülle fluchtend mit dem Bohrloch im Hohlraum gehalten. Nach dem Einspritzen der in einer Spritzvorrichtung zuvor vermengten Komponenten des Bindemittels - beispielsweise Polyesterharz oder Epoxydharz - wird das zu verankernde Befestigungselement durch das Ringteil in das noch weiche, in der Hülle befindliche Bindemittel eingedrückt. Das Befestigungselement kann entweder als Gewindebolzen oder als stirnseitig geschlossene Hülse mit einem Innengewinde ausgebildet sein. Das durch das Einschieben des Befestigungselementes noch zusätzlich zu verdrängende Bindemittel tritt aus den nunmehr groben Maschen der gedehnten Hülle aus und führt gleichzeitig zu einer geringfügigen Nachdehnung der Hülle. Aufgrund der unter Spannung stehenden Hülle wird das Befestigungselement lunkerfrei von dem Bindemittel umhüllt.

In weiterer Ausgestaltung der Erfindung kann der Käfig durch mindestens drei Stege gebildet sein, wobei die Innenseiten der Stege am Befestigungs element anliegen.

Durch die am Befestigungselement anliegenden Stege des Käfigs wird das Befestigungselement beim Einschieben in den Käfig geführt und nach dem Einschieben fluchtend mit dem Bohrloch und mittig in der Hülle gehalten.

Schließlich kann in weiterer Ergänzung der Erfindung die Hülle am Ring-und Stirnteil durch Schweißen, Kleben oder dgl. befestigt sein. Als Material für die gewebte Hülle hat sich insbesondere Polyamid als vorteilhaft erwiesen. Da auch der Käfig aus dem gleichen Material besteht, ist es möglich, die Hüllenenden mit dem Stirn-und Ringteil durch Ultraschall-Schweißen zu verbinden.

In weiterer Ergänzung der Erfindung kann der Durchmesser des Stirnteiles gegenüber dem Durchmesser des Ringteiles verringert, und über das Stirnteil eine das Hüllenende überdeckende Hülse gestülpt sein. Die Hülse dient zum Schutz der Hülle, um bei deren unsachgemäßen Einführen in das Bohrloch ein Aufreißen des Gewebes an den Bohrlochkanten zu verhindern.

In der Zeichnung ist ein Ausführungsbeispiel der Erfindung dargestellt.

Es zeigen:

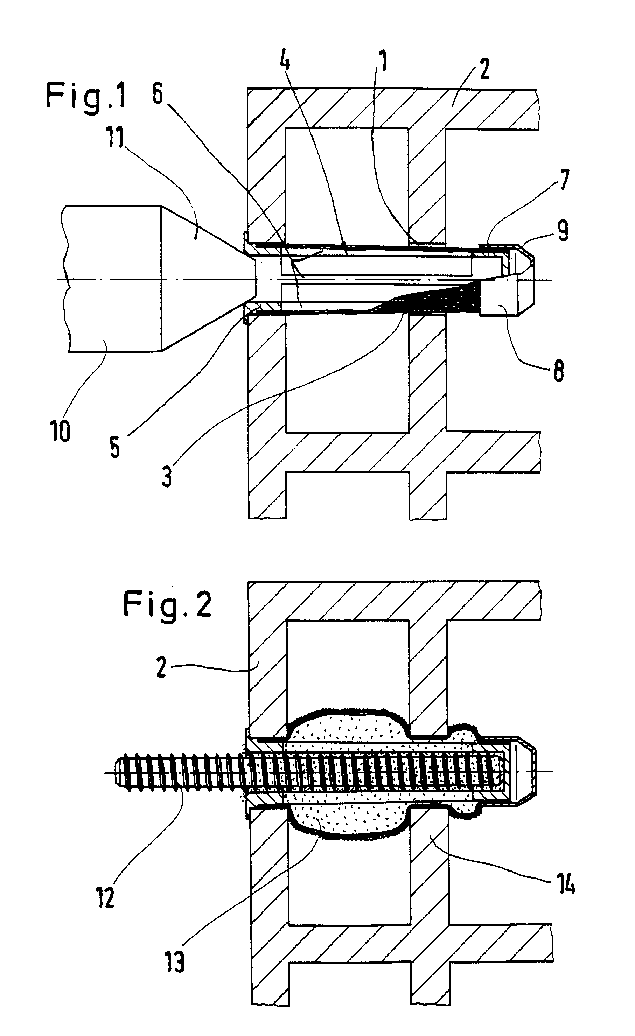

Figur 1 die über den Käfig gestülpte und in das Bohrloch eines Hohlkammerbausteines eingeschobene Hülle.

Figur 2 die Verankerung eines Gewindebolzens.

Die im Bohrloch 1 eines Hohlkammerbausteines 2 eingesetzte strumpfartige Hülle 3 besteht aus einem dehnfähigen Polyamidgewebe, das über einen ebenfalls aus Kunststoff bestehenden Käfig 4 gestülpt ist. Der Käfig 4 wird aus dem in der Bohrlochmündung festsetzbaren Ringteil 5, sowie vom Ringteil ausgehenden achsparallel verlaufenden Stegen 6 gebildet, die am vorderen Ende des Käfigs durch ein Stirnteil 7 zusammengehalten sind. Die Hülle ist jeweils am Ring-5 und Stirnteil 7 vorzugsweise durch Ultraschall-Schweißen befestigt. Zum Schutz der Hülle 3 beim Einführen in das Bohrloch ist der Käfig 4 vom Ringteil 5 ausgehend Richtung Stirnteil 7 verjüngt ausgebildet, und über das Stirnteil 7 eine das Hüllenende überdeckende napfförmige Hülse 8 gestülpt. Durch eine stark ausgeprägte Außenfase 9 an der Hülse 8 wird das Einschieben der Hülle 3 mit dem Käfig 4 in das Bohrloch 1 erleichtert.

Zum Ausfüllen der Hülle 3 mit aushärtbarem Bindemittel wird vorzugsweise ein auf zwei Komponenten basierendes Harz, beispielsweise Polyesterharz oder Epoxydharz verwendet. Nach dem Vermengen der Komponenten in der für solche Verankerungsverfahren gebräuchlichen Kartuschen 10 wird die Düse 11 der Kartusche am Ringteil 5 angesetzt und das Bindemittel in die Hülle 3 eingespritzt. Nach dem vollständigen Ausfüllen der Hülle 3 baut sich ein Spritzdruck auf, der zu einer wulstbildenden Dehnung der in Hohlräumen befindlichen Hüllenteile führt.

In diese derart aufgeblähte Hülle 3 wird das Befestigungselement 12 - im dargestellten Ausführungsbeispiel ein Gewindebolzen - eingeschoben. Durch die am Außendurchmesser des Gewindebolzens 12 anliegenden Innenseiten der Stege 6 wird der Gewindebolzen 12 beim Einschieben geführt und bis zum Aushärten des Bindemittels 13 zentrisch in der Hülle 3 gehalten. Die Verdrängung des Bindemittels beim Einschieben des Gewindebolzens 12 führt zu einer weiteren Dehnung der Hülle und zu einem geringfügigen Austritt des Bindemittels durch die Maschen der Hülle 3. Nach dem Aushärten des Bindemittels ergibt sich eine stabile Verankerung des Befestigungselementes 12, die einerseits auf einer Verklebung im Bereich der Stege 14 des Hohlkammerbausteines 2 und andererseits auf der Wulstbildung der mit ausgehärtetem Bindemittel gefüllten Hülle 3 in den Hohlräumen des Hohlkammerbausteines 2 beruht. Als Befestigungselemente sind statt Gewindebolzen auch am Einführende geschlossene Hülsen mit Innengewinde verwendbar, die mit ihrem rückwärtigen Stirnende bündig mit der Stirnseite des Ringteiles 5 abschließend in die Hülle 3 eingeschoben werden können.

## Ansprüche

1. Verankerung eines Befestigungselementes in einem in einen Hohlraum führenden Bohrloch eines Bauteiles, insbesondere Hohlkammerbausteines, Sandwichplatten oder dgl., durch Einspritzen einer aushärtbaren Masse in eine im Bohrloch befindliche, radiale Öffnungen aufweisende und durch ein in die Bohrlochmündung passendes Ringteil gehaltene Hülle, sowie durch Einschieben des Befestigungselementes in die mit Bindemittel ausgefüllte Hülle, dadurch gekennzeichnet, daß die Hülle aus einem dehnfähigem und über einen Käfig gestülpten engmaschigem Kunststoffgewebe besteht, wobei der Käfig durch vom Ringteil ausgehenden und über ein Stirnteil am vorderen Ende zusammengehaltenen achsparallel verlaufenden Stegen gebildet ist.

2. Verankerung nach Anspruch 1, dadurch gekennzeichnet, daß der Käfig durch mindestens drei Stege gebildet ist, wobei die Innenseiten der Stege am Befestigungselement anliegen.

3. Verankerung nach Anspruch 1, dadurch gekennzeichnet, daß die Hülle am Ring-und Stirnteil durch Schweißen, Kleben oder dgl. befestigt ist.

4. Verankerung nach Anspruch 1, dadurch gekennzeichnet, daß der Durchmesser des Stirnteiles gegenüber dem Durchmesser des Ringteiles verringert und über das Stirnteil eine das Hüllenende überdeckende Hülse gestülpt ist.

Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| X | DE-A-2 615 316 (WELLMANN) * Anspruch 1 * --- | 1,2 | F 16 B 13/14 |
| A | FR-A-2 223 587 (HARKE) * Figur 3 * ----- | 1 | |

|  |  |  | RECHERCHIERTE SACHGEBIETE (Int. Cl.3) |
|---|---|---|---|
|  |  |  | F 16 B 13/14 |

Der vorliegende Recherchenbericht wurde für alle Patentansprüche erstellt

| Recherchenort | Abschlußdatum der Recherche | Prüfer |
|---|---|---|
| BERLIN | 08-01-1988 | ZAPP E |

EPO FORM 1503 03.82 (P0403)